# EUROPEAN PATENT APPLICATION

(11) **EP 1 033 199 A2**
(43) Date of publication of application: **06.09.2000**
(21) Application number: 00104340.5
(22) Date of filing: 02.03.2000
(51) Int. Cl.: B23K 26/04

(54) **Arrangement relating to a laserbeam**

(30) Priority: 02.03.1999 SE 9900742
(71) Applicant: INSTITUTET FÖR VERKSTADSTEKNISK FORSKNING, S-431 53 Mölndal (SE)
(72) Inventor: Nilsson Thomas, 431 32 Mölndal (SE); Von Brömssen Bernt, 416 78 Göteborg (SE)
(74) Representative: Inger, Lars Ulf Bosson

(57) **Abstract**

The present invention refers to a device and method for measuring a laser beam (1) relative an element (2, 2a, 2b, 2c), which device at least comprises a laser (3), means for calculation (4), distance/position sensor (5), light sensor unit (6), and at least one light affecting body (7) which at least partly consists of an electrically conductive or magnetic material, wherein a laser beam (1) from the laser (3) and the light affecting body (7) are provided to perform at least one sweeping motion relative each other, wherein the distance/position sensor (5) is provided to supply the means for calculation (4) with an output signal concerning at least the distance/position of the light affecting body (7). The means for calculation (4) is provided to generate an output signal concerning the distance between the element (2, 2a, 2b, 2c) and at least the light affecting body (7) based on the speed of the sweeping motion and a difference in time between the points of time for reaching the desired distance/position given by the distance-/position sensor (5) and the desired distance given by the light sensor unit (6). The means for calculation (4) is also provided to generate an output signal concerning a lateral distance between the element (2, 2a, 2b, 2c) and the laser beam (1).

## Description

### TECHNICAL FIELD

The present invention refers to a device for aligning a laser beam relative an element.

### BACKGROUND OF THE INVENTION

With increased automation in the industry and increasing complexity in choice of material, lasers are becoming more important. Especially promising is Nd:YAG-laser and diode laser which are very suitable for integration with a robot, but also carbon dioxide and excimer laser are important to the industry. There are also other lasers having high industrial applicability.

In this type of inventions, usually there is a demand that the position of the laser should be situated in a predefined relation to the equipment in the physical or functional closeness of the laser beam, such as the laser cutting nozzle, or wire feeding equipment. If the position of the laser beam is not checked and controlled in relation to such an equipment there is, besides a risk of deterioration of performance, also a risk of damage on the equipment.

US 5,151,608 describes a so-called joint follower/distance ganger for, e.g. robot based welding. The device according to this patent concerns determination of the (vertical) distance between an object and the welding unit. No lateral distances between a beam and welding units are measured according to this document.

### TECHNICAL PROBLEM

The technical problem of the present invention concerns aligning position and orientation of a beam from a laser relative a laser cutting nozzle and/or surrounding equipment. The position and orientation of the beam relative a laser cutting nozzle concerns, e.g. the concentricity of the laser beam in the nozzle. Examples of surrounding equipment comprises means for wire feeding, tubes for additive material in the form of, e.g. powder, external welding equipments such as another laser, gas cap, filler wire, glue spreader or painting nozzle.

### SUMMERY OF THE INVENTION

The device according to the invention is formed in such a way that the device at least comprises a laser, means for calculation, distance-/position sensor, light sensor unit, and at least one light affecting body at least partly made of an electrically conductive or magnetic material, wherein a laser beam from the laser is provided to perform at least one sweeping motion over at least one light affecting body, or that the light affecting body and the laser beam perform at least one sweeping motion relative to each other. Characteristics are that the distance-/position sensor is arranged to provide the means for calculation with an output signal concerning at least the distance/position of the light affecting body; that the means for calculation is provided to generate an output signal on the distance or position between the element and at least one light affecting body based on the speed of the sweeping motion and the difference in time between the points of time for reaching the desired distance/position given by the distance-/position sensor and the desired distance given by the light sensor unit; and that the output signal is provided to indicate the distance/position relative the element to an operator by means of indication devices or to automatically adjust the distance/position relative the element.

### DESCRIPTION OF THE DRAWINGS

Fig. 1 shows the basic principle in the form of a first preferred embodiment of the present invention.

Fig. 2 shows a second preferred embodiment in a situation when the laser beam is in desired position relative the laser cutting nozzle and surrounding equipment.

### DESCRIPTION OF PREFERRED EMBODIMENT

The device according to the present invention is intended to be used for measuring a distance and position of a laser beam 1 relative an element 2. Examples of what the element 2 can consist of are a laser cutting nozzle and surrounding equipment. Examples of surrounding equipment are means for wire feeding, tubes for additive material in the form of e. g. powder, external welding equipments such as another laser, gas cap, filler wire, glue spreader, converting tools or painting nozzle. In the case when the element is a laser cutting nozzle the distance can for example be the distance, in the focal point of the laser beam, between the optical axis (centre axis) of the laser beam and the centre axis of the laser cutting nozzle.

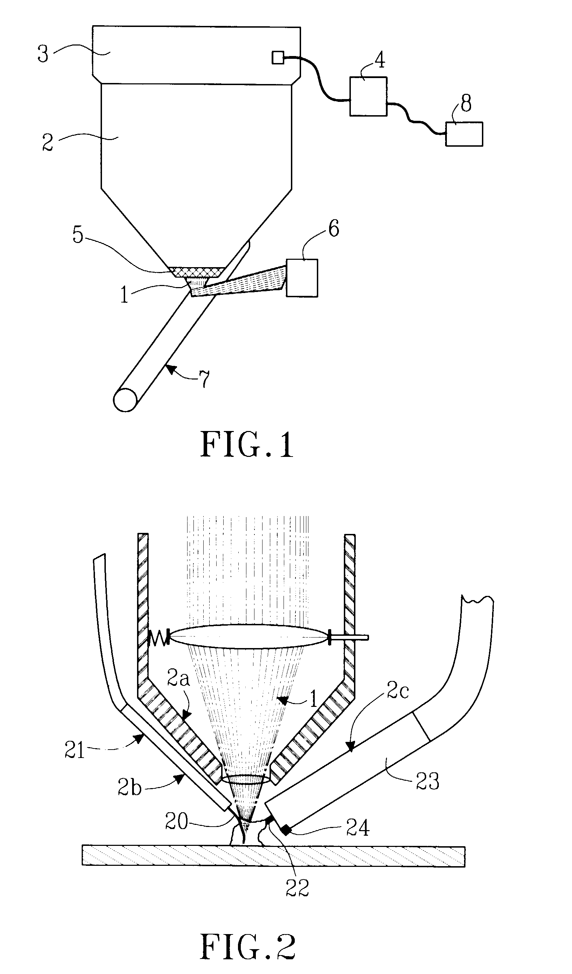

Figure 1 shows the basic principle and comprise a first preferred embodiment of the present invention. The device comprises at least a laser 3, means for calculation 4, distance-/position sensor 5, light sensor unit 6, and at least one light affecting body 7, which at least partly consists of an electrically conductive or magnetic material. The laser beam 1 from the laser 3 is provided to perform at least one sweeping motion over a light affecting body 7. The sweeping motion can be provided to be performed in at least two from each other separated directions. In this embodiment the element consists of a laser cutting nozzle 2.

The distance-/position sensor 5 is provided to provide an output signal about the distance/position of at least one light affecting body 7 to the means of calculation 4. A relative motion with sweeping form is provided to be performed between the laser cutting nozzle 2 and the distance-/position sensor 5. During the motion, the distance-/position sensor 5, which is arranged on a portion of the laser cutting nozzle 2, detects the distance or the position. During the same motion the light sensor 6 detects the relative motion of the laser beam 1 and the light affecting body 7. A difference in time between the time points when the distance-/position sensor 5 and the light sensor 6 indicate extreme points implies that the laser cutting nozzle 2 and the laser beam are not correctly aligned in relation to each other. Of practical reasons, it can be suitable to introduce a predefined time interval and if the difference exist within the time interval the device indicates that a correct alignment exists. It should be noted that the indication concerning correct measuring nevertheless can be provided to be performed by means of difference in position instead of time.

Thus, the output signal from the means for calculation 4 relates to the distance between the element 2 and at least one light affecting body 7 based on the speed of the sweeping motion and a difference in time between the points of time for reaching the desired distance/position given by the distance/position sensor 5 and the desired distance given by the light sensor unit 6. In this first embodiment, the preferred distance is a minimum difference in time corresponding to a minimal lateral distance between the optical axis of the laser beam and the centre axis of the element. This corresponds to that the laser beam is concentric (centered) relative to the nozzle in at least one direction. A measure of the concentricity or the absolute divergence from concentricity is attained after elementary calculations by, after a rotation around a suitable axis, for example 90 degrees rotation around the optical axis of the laser beam, again measure the distance between the optical axis and the centre axis of the element. In some applications, it can be enough if the desired distance is at least close to the minimum distance. At constant speed the difference in time is multiplied with the sweep speed which gives the magnitude of the measured divergence. In those cases where the sweep speed is not constant, the device is arranged to integrate the sweep speed over the difference in time. To increase the option of placement of the light sensor 6 it can be calibrated in such a way that the searched extreme point not necessary corresponds to the maximum output signal from the light sensor 6. That is, a predetermined value of the output signal is provided to correspond to the occasion when the distance between the laser beam 1 and the light affecting body 7 is minimum. This can be solved for example by providing a look-up table. Necessary calculations are provided to be performed by the means for calculation 4. The output signal is provided to indicate the distance/position relative the element 2 to an operator by means of indication devices 8 or to automatically adjust the distance/position relative the element 2. Examples of indication devices 8 are lamp, sound signal or a value that describes the magnitude of the measured divergence. Alternatively, the device according to the invention can be provided to compensate for the measured divergence by itself with help of a servo-equipment, step motors or the like which can be known by a skilled person. In this first embodiment the light affecting body 7 consists of a entirely or partly metallic or metallized wire.

The second embodiment is shown in Figure 2. Due to the great similarities between the first and second preferred embodiments only substantial differences between them will be described. The presentation of this embodiment focuses on the arrangement of the element 2a-2c at the laser beam 1. Besides the laser cutting nozzle 2a, there are two more elements 2b and 2c in the second embodiment. In the second embodiment the first element 2a consists of a filler wire 20. It is possible that the element 2a also comprises a wire feeding arrangement 21, which guides the filler wire 20. In Figure 2 is also provided a second element 2c which consists of a welding electrode 22, which is a part of a welding torch 23. It should be noted that the element 2c can also consist of the welding torch 23. On the welding torch 23 a ferro magnetic marker 24 can be provided, arranged to make measurement based on magnetism. The concentricity or the lateral position between the laser beam and the elements 2a-2b is here decisive for the correct function of the equipment. In the following the ferro magnetic marker 24 and its function will be described in detail. As mentioned above the element can consist of several different components associated with welding (but even other processes), such as tubes for additive material in the form of e. g. powder, external welding equipments such as another laser, gas cap, filler wire, glue spreader or painting nozzle.

Within the scope of the present invention is also included that in the distance-/position sensor 5 at least one of the light affecting bodies 7 is arranged to be the active portion of a capacitive sensor, where either the element 2 or the light affecting body 7 are provided to indicate a reference potential and that the distance-/position sensor 5 is arranged to read the capacitance between them for calculation of the distance. That is, the distance is measured from the capacitance according to basic principles within electricity. An alternative to measuring of capacitance is to base the sensor on an inductive sensor. A condition for this is that the element 2 is magnetic or that a ferro magnetic marker is provided at the element for magnetic coupling and that two light affecting bodies 7, which in this case consist of two wires, are arranged with a distance between them that provides a measurable mutual inductance. The wires must also be arranged electrically insulated in relation to each other. Furthermore, one of the wires is provided to be energised and the other is provided to be read for calculation of the distance by means for calculation 4.

Within the scope of the present invention there is also a method for aligning a laser beam 1 relative an element 2. Where the device at least comprises a laser 3, means for calculation 4, distance/position sensor 5, light sensor unit 6, and at least one light affecting body 7 which at least partly comprises a conductive or magnetic material. A laser beam 1 from the laser 3 performs at least one sweeping motion over a light affecting body 7. The distance- /position sensor 5 gives an output signal about the distance/position of at least one light affecting body 7 to the means for calculation 4. The means for calculation 4 generates an output signal about the distance between the element 2 and at least one light affecting body 7 based on the speed of the sweeping motion and a difference in time between the time points for reaching the desired distance/position given by the distance/position sensor 5 and the desired distance given by the light sensor unit 5. The output signal indicates the distance/position relative the element 2 to an operator by means of indication devices 8 or to automatically adjust the distance/position relative the element 2.

Within the scope of the present invention it is also possible to provide a marker close to the elements when the element 2 is made of a non conductive or non magnetic material. Examples of markers 24 are a thin film of electrically conductive or magnetic material.

## Claims

1. Device for measuring a laser beam (1) relative an element (2, 2a, 2b, 2c), which device at least comprises a laser (3), means for calculation (4), distance/position sensor (5), light sensor unit (6), and at least one light affecting body (7) which at least partly comprises an electrically conductive or magnetic material, wherein a laser beam (1) from the laser (3) and the light affecting body (7) are arranged to perform at least one sweeping motion relative each other, wherein the distance/position sensor (5) is provided to supply the means for calculation (4) with an output signal about at least the distance/position of the light affecting body (7),
***characterised in,***
that the means for calculation (4) is provided to generate an output signal concerning the distance between the element (2, 2a, 2b, 2c) and at least the light affecting body (7) based on the speed of the sweeping motion and a difference in time between the points of time for reaching the desired distance/position given by the distance/position sensor (5) and the desired distance given by the light sensor unit (6); and
that the means for calculation (4) is provided to generate an output signal concerning a lateral distance between the element (2, 2a, 2b, 2c) and the laser beam (1).

2. Device according to claim 1,
***characterised in,***
that said distance between the laser beam and the element gives the concentricity of the laser beam.

3. Device according to claim 1,
***characterised in,***
that the element (2) is a laser cutting nozzle.

4. Device according to claim 1,
***characterised in,***
that the element (2) is a welding filler wire (20).

5. Device according to claim 1,
***characterised in,***
that at least one light affecting body (7) comprises of at least one entirely or partly metallic or metallized wire.

6. Device according to claim 1,
***characterised in,***
- that at least one light affecting body (7) in the distance/position sensor (5) is provided to form the active portion of a capacitive or inductive sensor, where either the element (2) or the light affecting body (7) is provided to present a reference potential; and
- that the distance-/position sensor (5) is provided to read off the capacitance between them for calculation of the distance.

7. Device according to claim 1,
***characterised in,***
that when the element (2) is made of a non conductive or non magnetic material a marker (24), such as a thin film of conductive or magnetic material is provided at the element (2).

8. Device according to claim 5,
***characterised in,***
- that the distance/position sensor (5) comprises an inductive sensor;
- that a ferro magnetic marker (24) is provided at the element (2);
- that two wires are provided with a distance between them which provide a measurable mutual inductivity;
- that the wires are electrically insulatedly arranged in relation to each other; and
- that one of the wires is provided to be energised and that the other wire is provided to be read for calculation of the distance by the means for calculation (4).

9. Device according to claim 1,
***characterised in,***
that the sweeping motion is performed in at least two from each other separated directions.

10. Device according to claim 1,
***characterised in,***
that desirable distances are minimum distances or at least close to minimum distances.

11. Device according to any of the claims 1-10,
***characterised in,***
that the means for calculation is provided to indicate the distance/position relative the element (2, 2a, 2b, 2c) to an operator by means of indication devices (8) or to automatically adjust the distance/position relative the element (2, 2a, 2b, 2c).

12. Method for measuring the concentricity of a laser beam (1) relative an element (2), the device at least comprising a laser (3), means for calculation (4), distance/position sensor (5), light sensor unit (6), and at least one light affecting body (7) which at least partly consists of an electrically conductive or magnetic material, wherein a laser beam (1) from the laser (3) performs at least one sweeping motion over at least one light affecting body (7),
***characterised in,***
- that the distance/position sensor (5) gives an output signal about the distance/position of a at least one light affecting body relative the means for calculation (4);
- that the means for calculation (4) generates an output signal concerning the distance between the element (2, 2a, 2b, 2c) and at least the light affecting body (7) based on the speed of the sweeping motion and the difference in time between the points of time for reaching the desired distance/position given by the distance/position sensor (5) and the desired distance given by the light sensor unit (6); and
- that the output signal indicates the distance/position relative the element (2) to an operator by means of indication devices (8) or to automatically adjust the distance/position relative the element (2).

13. Method according to claim 12,
***characterised in,***
that a measure of the concentricity or an absolute divergence from concentricity are achieved after a calculation by, after rotation around a suitable axis, again measuring the distance between the axis and the centre axis of the element.

14. Method according to claim 12,
***characterised in,***
that the said axis is about 90 degrees rotation around the optical axis of the laser beam.

15. Method according to claim 12,
***characterised in,***
that the difference in time is multiplied with the sweep speed which gives the magnitude of the measured divergence during constant speed.

16. Method according to claim 12,
***characterised in,***
that if the sweep speed is not constant, the sweep speed is integrated over the difference in time.
